# EUROPÄISCHE PATENTSCHRIFT

(11) **EP 1 307 651 B1**
(45) Veröffentlichungstag und Bekanntmachung des Hinweises auf die Patenterteilung: **25.10.2006**
(21) Anmeldenummer: 01964886.4
(22) Anmeldetag: 09.08.2001
(51) Int. Cl.: F02M 61/16, F02M 51/06, F02M 61/08, F02M 59/46, F16K 31/00

(54) **DOSIERVENTIL MIT EINEM HYDRAULISCHEN ÜBERTRAGUNGSELEMENT**
METERING VALVE WITH A HYDRAULIC TRANSMISSION ELEMENT
SOUPAPE DE DOSAGE COMPORTANT UN ELEMENT DE TRANSFERT HYDRAULIQUE

(30) Priorität: 11.08.2000 DE 10039424
(43) Veröffentlichungstag der Anmeldung: 07.05.2003
(73) Patentinhaber: SIEMENS AKTIENGESELLSCHAFT, 80333 München (DE)
(72) Erfinder: FISCHER, Bernhard, 84513 Töging am Inn (DE); GOTTLIEB, Bernhard, 81739 München (DE); KAPPEL, Andreas, 85649 Brunnthal (DE); MEIXNER, Hans, 85540 Haar (DE); MOCK, Randolf, 85662 Hohenbrunn (DE)
(86) Internationale Anmeldenummer: PCT/DE2001/003042
(87) Internationale Veröffentlichungsnummer: WO 2002/014683

(56) Entgegenhaltungen:
- DE-A- 19 744 235
- US-A- 4 858 439
- US-A- 5 697 554
- US-A- 6 062 532

## Beschreibung

Die Erfindung betrifft ein Dosierventil gemäß dem Oberbegriff des Patentanspruchs 1.

Dosierventile werden als Einspritzventile beispielsweise bei der Benzin-Direkteinspritzung oder bei einer Diesel-Direkteinspritzung verwendet, um eine Brennkraftmaschine eines Kraftfahrzeugs mit einer genau dosierten Kraftstoffmenge zu versorgen. Dabei werden bei modernen Einspritzventilen Piezo-Aktoren zur Steuerung einer Düsennadel verwendet. Derzeit verfügbare piezoelektrische Vielschicht-Aktoren wurden für das Common-Rail-Einspritzsystem entwickelt und weisen hohe Blockierkräfte von bis zu 2000 Newton bei einer geringen Verlängerung von bis zu 60 µm auf.

Für eine direkte Betätigung einer Düsennadel in einem Benzin-Einspritzventil ist ein Stellweg von bis zu 100 µm bei dementsprechend geringerer Kraft notwendig. Daher sind die bereits verfügbaren Piezo-Aktoren fehlangepasst.

Weiterhin wirken sich thermische Dehnungen, Alterungseffekte in der Piezo-Keramik und druckbedingte Dehnungen insbesondere bei den geringen Auslenkungen von bis zu 60 µm negativ auf eine korrekte Einstellung der Düsennadel aus.

In dem amerikanischen Patent US 4 858 439 wird eine Vorrichtung beschrieben, in der der Hub an einem Einspritzsystem variierbar ist. Ziel der Erfindung ist in diesem Fall, die Hubvariation zu erzeugen ohne eine Ölzufuhreinrichtung zu benutzen, die Öl in eine Hydraulikkammer zuführt, um Verlustöl zu ersetzen oder Luftblasen darin zu vermeiden. Das gesamte hydraulische System wird dazu mit mehreren flexiblen Dichtgliedern umgeben, beispielsweise Faltenbalge, so dass Verlustölmengen im System gehalten werden.

Die Aufgabe der Erfindung besteht darin, ein Einspritzventil bereitzustellen, das eine verbesserte Funktionsfähigkeit aufweist.

Die Aufgabe der Erfindung wird durch die Merkmale des Anspruchs 1 gelöst. Ein Vorteil der Erfindung besteht darin, dass ein hydraulischer Übersetzer zwischen dem Piezo-Aktor und der Düsennadel angeordnet ist, der über einen Dichtspalt mit einem Fluid mit vorgegebenen Druck versorgt wird. Auf diese Weise wird gewährleistet, dass die in dem hydraulischen Übersetzer ausgebildete Hydraulikkammer immer vollständig mit Fluid gefüllt ist und der Piezo-Aktor immer über eine gefüllte Hydraulikkammer mit der Düsennadel in Wirkverbindung steht. Dadurch wird ein Ausgleich von thermischen Dehnungen, Alterungseffekten und druckbedingten Dehnungen erreicht.

Weitere vorteilhafte Ausbildungsformen sind in den abhängigen Ansprüchen angegeben.

Die Erfindung wird im folgenden anhand der Figuren näher erläutert. Es zeigen:
- Fig. 1: ein nach außen öffnendes Einspritzventil und
- Fig. 2: ein nach innen öffnendes Einspritzventil.

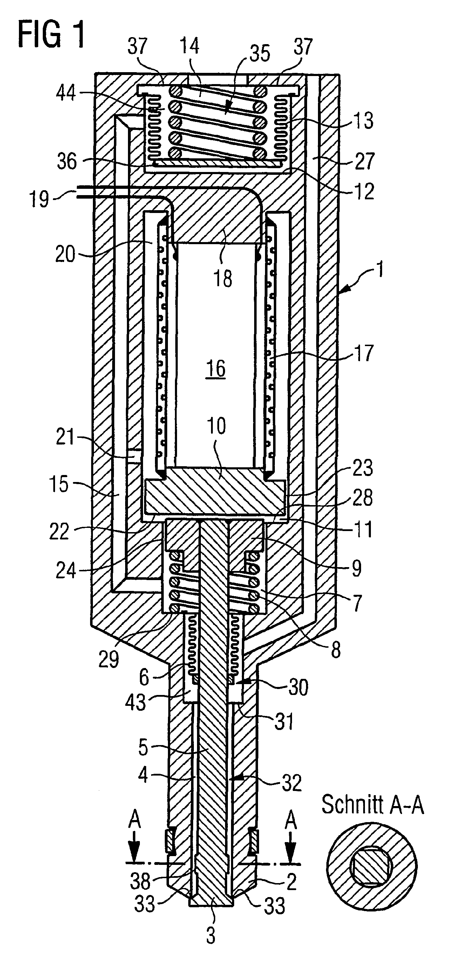

Fig. 1 zeigt einen Querschnitt durch ein Einspritzventil mit einem Gehäuse 1, das eine Aktorkammer 20 aufweist. In der Aktorkammer 20 ist der Piezo-Aktor 16 angeordnet, der mit einem oberen Ende an einer Anschlagplatte 18 befestigt ist, die am Gehäuse 1 mittensymmetrisch in die Aktorkammer 20 hineinragend ausgebildet ist. Am anderen Ende des Piezo-Aktors 16 ist ein Primärkolben 10 angebracht, an dem ein unteres Ende einer hülsenförmigen Rohrfeder 17 befestigt ist. Das obere Ende der Rohrfeder 17 ist am Außenumfang der Anschlagplatte 18 befestigt. Die Rohrfeder 17 ist in der Weise ausgebildet, dass der Piezo-Aktor 16 während der gesamten Betriebsweise auf Druck beansprucht ist. Der Piezo-Aktor 16 weist am oberen Ende elektrische Anschlüsse 19 auf, die aus dem Gehäuse 1 herausgeführt sind und mit einem nicht dargestellten Steuergerät in Verbindung stehen. Über die elektrischen Anschlüsse 19 wird die Länge des Piezo-Aktors 16 nach bekannten Verfahren vom Steuergerät eingestellt.

Die Aktorkammer 20 ist vorzugsweise in Form eines Zylinders ausgebildet und geht über einen ersten Absatz 28 in eine erste Kammer 7 über, die mittensymmetrisch zur Längsachse des Einspritzventils im Gehäuse 1 ausgebildet ist und einen kleineren Durchmesser als die Aktorkammer 20 aufweist. Die erste Kammer 7 erstreckt sich in Richtung auf eine Düsenspitze 2 und geht über einen zweiten Absatz 29 in eine zweite Kammer 30 über, die vorzugsweise zylinderförmig ausgebildet ist und mittensymmetrisch zur Längsachse des Einspritzventils angeordnet ist. Der Durchmesser der zweiten Kammer 30 ist kleiner als der Durchmesser der ersten Kammer 7.

Die zweite Kammer 30 geht über einen dritten Absatz 31 in eine dritte Kammer 32 über. Die dritte Kammer 32 ist mittensymmetrisch zur Längsachse des Einspritzventils angeordnet und weist einen kleineren Querschnitt als die zweite Kammer 30 auf. Die dritte Kammer 32 erstreckt sich mit konstantem Durchmesser bis zu einer Öffnung an der Düsenspitze 2.

Der Primärkolben 10 ist im Querschnitt der Aktorkammer 20 angepasst, so dass der Primärkolben 10 in der Aktorkammer 20 über einen ersten Dichtspalt 23 geführt ist. In der ersten Kammer 7 ist ein Sekundärkolben 9 ausgebildet, der im Querschnitt zylinderförmig ausgebildet ist und über einen zweiten Dichtspalt 24 in der ersten Kammer 7 geführt ist. Zwischen dem Primärkolben 10 und dem Sekundärkolben 9 ist eine Hydraulikkammer 11 ausgebildet, die mit Fluid gefüllt ist.

An dem Sekundärkolben 9 ist mittensymmetrisch zur Längsachse des Einspritzventils eine Düsennadel 5 befestigt, die bis zur Düsenspitze 2 durch die erste, zweite und dritte Kammer 7, 30 32 bis über die Düsenspitze 2 hinaus geführt ist. Am Ende der Düsennadel 5 weitet sich die Düsennadel 5 zu einem verbreiterten Durchmesser aus, an dem ein Ventilsitz 3 ausgebildet ist, der mit einer Sitzfläche 33 der Düsenspitze 2 zusammenwirkt, die im Bereich der Öffnung der Düsenspitze 2 ausgebildet ist.

In der ersten Kammer 7 ist ein erstes Federelement 8 angeordnet, das am zweiten Absatz 29 aufliegt und gegen eine Absatzfläche 34 des Sekundärkolbens 9 gespannt ist. Durch das erste Federelement 8 wird der Sekundärkolben 9 in Richtung auf die Hydraulikkammer 11 vorgespannt. Auf diese Weise wird gleichzeitig der Ventilsitz 3 der Düsennadel 5 auf die Sitzfläche 33 gedrückt, so dass der Einspritzraum 4, der in der dritten Kammer 32 durch die Düsennadel 5 und das Gehäuse 1 begrenzt wird, geschlossen ist.

Im Bereich der zweiten Kammer 30 ist ein erster Faltenbalg 6 vorgesehen, der die Düsennadel 5 umfasst und mit einem ersten Ende umlaufend dicht an der Düsennadel 5 verschweißt ist. Das zweite Ende des ersten Faltenbalges 6 ist im Bereich des zweiten Absatzes 29 am Gehäuse 1 umlaufend dicht verschweißt. Damit ist ein Teil der zweiten Kammer 30, der sogenannte Einspritzbereich 43, gegenüber der ersten Kammer 7 abgedichtet. In den Einspritzbereich der zweiten Kammer 30 mündet eine Zulaufbohrung 27, die mit einem Kraftstoffreservoir, beispielsweise einem Kraftstoffspeicher, in Verbindung steht. Über die Zulaufbohrung 27 wird der Einspritzraum 4 mit Kraftstoff versorgt. Der Kraftstoffspeicher wird von einer Kraftstoffpumpe mit Kraftstoff mit vorgebbarem Druck versorgt

Über dem Piezo-Aktor 16 ist im Gehäuse 1 eine vierte Kammer 35 ausgebildet. Die vierte Kammer 35 ist vorzugsweise zylinderförmig ausgebildet und mittensymmetrisch zur Längsachse des Einspritzventils angeordnet. In der vierten Kammer 35 ist ein zweiter Faltenbalg 13 angeordnet, der mit einem oberen Ende umlaufend dicht mit dem Gehäuse 1 verbunden ist. Das untere Ende des zweiten Faltenbalgs 13 ist umlaufend dicht mit einer Druckplatte 36 verbunden. Die Druckplatte 36 befindet sich ebenfalls in der vierten Kammer 35. Auf diese Weise ist die vierte Kammer 35 in einen Druckbereich 44 und in einen Fluidbereich 12 unterteilt, wobei der Fluidbereich außerhalb des zweiten Faltenbalgs 13 und unterhalb der Druckplatte 36 ausgebildet ist. Im Druckbereich 44 ist ein zweites Federelement 14 vorgesehen, das zwischen einem dritten Anschlag 37 und der Druckplatte 36 gespannt ist. Der dritte Anschlag 37 ist am Gehäuse 1 in Form einer Ringfläche senkrecht zur Längsachse des Einspritzventils ausgebildet. Anstelle des zweiten Federelements 14, des zweiten Faltenbalgs 13 und der Druckplatte 36 kann auch ein anderes Druckerzeugungsmittel vorgesehen sein, das das Fluid, das an den ersten und/oder zweiten Dichtspalt 23, 24 angrenzt, mit Druck beaufschlagt. Beispielsweise könnte anstelle des zweiten Federelements 14 eine Gasdruckquelle vorgesehen sein, die die Druckplatte 36 mit Druck beaufschlagt.

Die vierte Kammer 35 ist mit einer Bohrung 15 in Verbindung, die den Fluidbereich 12 der vierten Kammer 35 mit der ersten Kammer 7 hydraulisch verbindet. Weiterhin ist vorzugsweise eine Verbindungsbohrung 21 vorgesehen, die die erste Bohrung 15 mit der Aktorkammer 20 hydraulisch verbindet. Auf diese Weise sind der erste und der zweite Dichtspalt 23, 24 über die Aktorkammer 20, die Verbindungsbohrung 21 und die erste Bohrung 15 bzw. über die erste Kammer 7 und die erste Bohrung 15 mit dem Fluidbereich der vierten Kammer 35 hydraulisch verbunden. Durch die Anordnung des ersten Faltenbalgs 1 ist dieser Druckbereich gegen den Einspritzraum 4 abgedichtet. Vorzugsweise ist die druckwirksame Fläche des ersten Faltenbalgs 6 in der Weise bemessen, dass die Düsennadel 5 druckausgeglichen ist. Dazu ist die druckwirksame Fläche des ersten Faltenbalgs so groß gewählt, wie die Fläche, die am Ventilsitz 3 ausgebildet ist und bei geschlossenem Einspritzventil mit Druck in Öffnungsrichtung der Düsennadel 5 beaufschlagt ist.

Der erste und der zweite Dichtspalt 23, 24 sind in der Weise bemessen, dass sich kurzzeitige Druckdifferenzen zwischen der Hydraulikkammer 11 und der Aktorkammer 20 oder der Hydraulikkammer 11 und der ersten Kammer 7 nicht ausgleichen. Dabei werden unter "kurzzeitig" Zeiträume verstanden, während denen eine Ansteuerung des piezoelektrischen Aktors eine Auslenkung des Aktors und damit ein Öffnen des Einspritzventils bewirkt.

Nach der Montage des Einspritzventils ist die Hydraulikkammer 11 vollständig mit Fluid gefüllt. Zudem ist die erste Kammer 7, die Aktorkammer 20, die Bohrung 15 und der Fluidbereich 12 der vierten Kammer 35 vollständig mit Fluid gefüllt. Das Fluid steht über die Vorspannung des zweiten Federelements 14 unter einem vorgegebenen Druck, der beispielsweise 10 bar beträgt.

Ergeben beispielsweise thermische unterschiedliche Ausdehnungen zwischen Gehäuse und Piezo-Aktor oder Abnutzungen an der Düsennadel 5 oder der Düsenspitze 2, dass sich der Abstand zwischen dem Primärkolben 10 und dem Sekundärkolben 9 vergrößert, so wird Fluid über den ersten und den zweiten Dichtspalt 23, 24 in die Hydraulikkammer 11 aufgrund des vorhandenen Drucks gefüllt.

Wird der Abstand zwischen dem Sekundärkolben 9 und dem Primärkolben 10 verkleinert, so fließt Fluid aus der Hydraulikkammer 11 über den ersten und zweiten Dichtspalt 23, 24 heraus. Dabei wird die Druckplatte 16 gegen die Vorspannkraft des zweiten Federelements 14 nach oben bewegt und der Fluidbereich der vierten Kammer 35 vergrößert. Auf diese Weise wird sichergestellt, dass die Hydraulikkammer 11 immer vollständig mit Fluid gefüllt ist und der Piezo-Aktor 16 in der Ruheposition immer direkt über das Fluid der Hydraulikkammer 11 mit der Düsennadel 5 in Wirkverbindung steht. Damit wird die Düsennadel 5 immer ohne Zeitverzögerung bei einer Auslenkung des Aktors 16 bewegt.

Durch eine unterschiedliche Ausbildung der Flächen, mit der der Primärkolben 10 und der Sekundärkolben 9 an die Hydraulikkammer 11 grenzen, kann ein gewünschtes Übersetzungsverhältnis eingestellt werden, mit dem eine Elongation des Piezo-Aktors 16 in eine entsprechende Verschiebung der Düsennadel 5 übertragen wird. Vorzugsweise wird die Elongation des Piezo-Aktors 16 in einen vergrößerten Stellweg der Düsennadel 5 umgesetzt, um die geringe Elongation von 60 µm für einen benötigten Öffnungsweg von ungefähr 100 µm für ein sicheres Öffnen des Ventilsitzes 3 der Düsennadel 5 zu erreichen.

Das Einspritzventil funktioniert in der Weise, dass der Piezo-Aktor 16 über die Anschlüsse 19 angesteuert wird und sich dabei gegen die Vorspannkraft der Rohrfeder 17 auslenkt. Dabei wird der Primärkolben 10 in Richtung auf den Sekundärkolben 9 gedrückt, so dass der Sekundärkolben 9 nach unten in Richtung auf den Ventilsitz 3 bewegt wird. Dabei wird auch der Ventilsitz 3 der Düsennadel 5 von der zugeordneten Sitzfläche 33 abgehoben, so dass der Einspritzraum 4 über eine Ringfläche geöffnet wird und Kraftstoff abgegeben wird. Über die Zulaufbohrung 27 wird Kraftstoff in den Einspritzraum 4 nachgefördert. Soll die Einspritzung enden, so wird das Ansteuersignal des Piezo-Aktors gestoppt, so dass sich der Piezo-Aktor 16 wieder auf seine ursprüngliche Länge verkürzt und dabei den Primärkolben 10 vom Sekundärkolben 9 wegbewegt, wodurch die Düsennadel 5, auch unterstützt von dem ersten Federelement 8, nach oben bewegt wird, so dass der Ventilsitz 3 an der Sitzfläche 33 in Anlage gebracht wird und die Einspritzöffnung, die zwischen der Sitzfläche 33 und dem Ventilsitz 3 ausgebildet ist, geschlossen wird.

In einer bevorzugten Ausführungsform weist die Rohrfeder 17 Ausnehmungen auf, so dass das Fluid in den Innenraum der Rohrfeder 17 fließen kann und den Piezo-Aktor 16 bedeckt. Vorzugsweise ist die Aktorkammer 20 vollständig mit Fluid gefüllt. Auf diese Weise wird eine thermische Kopplung zwischen dem Piezo-Aktor 16 und der Rohrfeder 17 und dem Gehäuse 1 hergestellt, so dass der Piezo-Aktor 16 gut Wärme auf das Gehäuse 1 abgibt. Dadurch wird eine Kühlung des Piezo-Aktors 16 bei einer hohen Ansteuerfrequenz erreicht, die besonders von Vorteil ist.

Die Düsennadel 5 wird im Bereich der Düsenspitze 2 über einen Führungsabschnitt 38 an der Innenwand der Düsenspitze 2 geführt. Diese Führung ist im Schnitt A-A dargestellt, wobei die abgerundete Quadratform des Führungsabschnitts 38 dafür sorgt, dass Kraftstoff vom oberen Bereich des Einspritzraums 4 zum Ventilsitz 3 gelangt.

Der erste und der zweite Faltenbalg 6, 13 sind aus Metall hergestellt und relativ robust, so dass die Druckdifferenz von ungefähr 300 bar, die zwischen dem Einspritzraum 4 und der ersten Kammer 7 auftritt, problemlos ausgehalten wird.

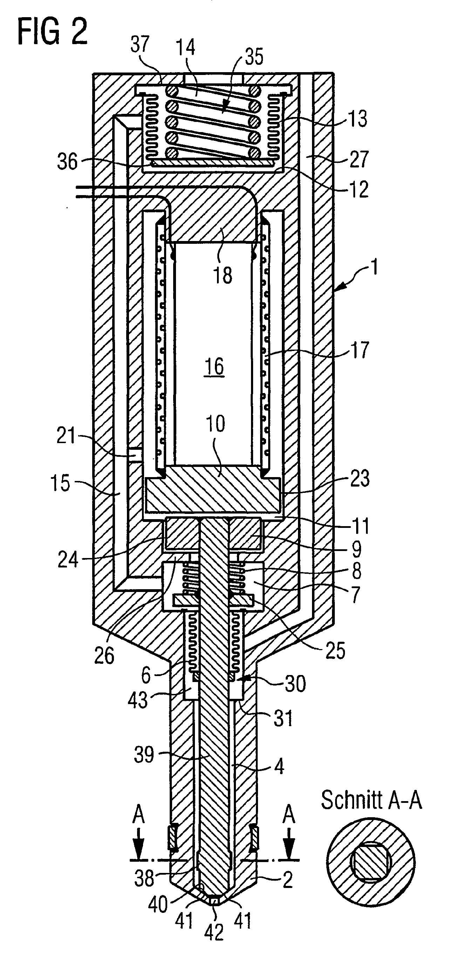

Fig. 2 zeigt ein weiteres Ausführungsbeispiel der Erfindung, wobei das in Fig. 2 dargestellte Einspritzventil ein nach innen öffnendes Einspritzventil darstellt. Im wesentlichen ist das Einspritzventil der Fig. 2 entsprechend dem Einspritzventil der Fig. 1 ausgebildet, wobei jedoch Unterschiede in der Ausbildungsform der Spitze der zweiten Düsennadel 39 und der Düsenspitze 2 und in der Vorspannung der zweiten Düsennadel 39 vorhanden sind. Die zweite Düsennadel 39 weist an ihrem unteren Ende einen zweiten Ventilsitz 40 auf, der als konisches Ende der zweiten Düsennadel 39 ausgebildet ist. Dem zweiten Ventilsitz 40 ist eine zweite Sitzfläche 41 zugeordnet, die an der Innenfläche der Düsenspitze 2 ausgebildet ist. Die zweite Sitzfläche 41 ist ebenfalls konusförmig ausgebildet und weist einen vorgegebenen Differenzwinkel zur Konusform des zweiten Ventilsitzes 40 auf. In der Düsenspitze 2 ist mittig ein Einspritzloch 42 ausgebildet, das vom Einspritzraum 4 getrennt ist, wenn der zweite Ventilsitz 40 auf der zweiten Sitzfläche 41 aufsitzt.

Weiterhin ist an der zweiten Düsennadel 39 im Bereich der ersten Kammer 7 ein erster ringförmiger Anschlag 25 ausgebildet. Zudem ist oberhalb des ersten Anschlags 25 ein zweiter ringförmiger Anschlag 26 am Gehäuse 1 ausgebildet, der die Düsennadel 5 umgibt. Zwischen dem ersten und dem zweiten Anschlag 25, 26 ist ein drittes Federelement 42 angeordnet, das die Düsennadel 5 in Richtung auf die Düsenspitze 2 vorspannt. Der weitere Aufbau des zweiten Einspritzventils der Fig. 2 entspricht dem Aufbau des ersten Einspritzventils der Fig. 1 und die Funktionsweise des zweiten Einspritzventils ist entsprechend der Funktionsweise des ersten Einspritzventils, wobei das zweite Einspritzventil nach innen öffnet.

Die Ansteuerung des zweiten Einspritzventils ist unterschiedlich zur Ansteuerung des ersten Einspritzventils, da das zweite Einspritzventil nach innen öffnet. In der Schließposition, bei der keine Einspritzung erfolgt, ist der Aktor 16 angesteuert und in der Länge vergrößert, wobei die zweite Düsennadel 39 über die Hydraulikkammer 11 auf die zweite Sitzfläche 41 gepresst ist. Soll eine Einspritzung erfolgen, so wird der Aktor 16 über eine entsprechende Ansteuerung verkürzt und die zweite Düsennadel 39 über die Hydraulikkammer 11 vom zweiten Ventilsitz 40 abgehoben. Zum Beenden der Einspritzung wird die Länge des Aktors 16 vergrößert und dadurch die zweite Düsennadel 39 wieder auf diese zweite Sitzfläche 41 gedrückt. Die Erfindung wurde am Beispiel einer Düsennadel 5, 39 als Stellglied beschrieben, kann jedoch auf jede Art von Stellglied angewendet werden.

## Patentansprüche

1. Dosierventil mit einem Gehäuse, in dem:
- ein ansteuerbarer Aktor zur Dosierung eines Fluides vorgesehen ist,
- der Aktor in Wirkverbindung mit einem Stellglied steht,
- zwischen dem Aktor (16) und dem Stellglied (5, 39) ein hydraulisches Übertragungselement mit einer Hydraulikammer (11) vorgesehen ist,
- die Hydraulikkammer (11) mit einem separaten Fluid gefüllt ist,
- über das Übertragungselement eine Auslenkung des Aktors (16) auf das Stellglied (5, 39) übertragbar ist,
**dadurch gekennzeichnet,**
**dass**
- die Hydraulikkammer (11) über wenigstens einen Dichtspalt (23, 24) mit einem unter einem vorgebbaren Druck stehenden Fluidreservoir in Verbindung steht,
- das Fluidreservoir an ein Druckerzeugungsmittel angeschlossen ist und der Druck im Fluidreservoir vom Druckerzeugungsmittel vorgegeben und konstant unabhängig von Temperatur- oder Abnutzungseinflüssen gehalten ist.

2. Dosierventil nach Anspruch 1, **dadurch gekennzeichnet, dass** die Hydraulikkammer (11) von einem ersten Kolben (9) begrenzt ist, der in einer ersten Kammer (7) über einen Dichtspalt (24) beweglich geführt ist, und dass
die erste Kammer (7) mit dem Fluidreservoir in Verbindung steht.

3. Dosierventil nach einem der Ansprüche 1 oder 2, **dadurch gekennzeichnet, dass** der Aktor (16) mit einem zweiten Kolben (10) in Wirkverbindung steht, der an die Hydraulikkammer (11) grenzt und über einen weiteren Dichtspalt (23) beweglich in einer Aktorkammer (20) geführt ist, die mit dem Fluidreservoir in Verbindung steht.

4. Dosierventil nach einem der Ansprüche 2 oder 3, **dadurch gekennzeichnet, dass** eine Düsennadel (5, 39) an dem ersten Kolben (9) befestigt ist,
dass die Düsennadel (5, 39) durch die erste Kammer (7) und durch einen Einspritzraum (4) zu einer Düsenspitze (2) geführt ist,
dass ein Faltenbalg (6) mit der Düsennadel (5, 39) und mit dem Gehäuse (1) umlaufend dicht verbunden ist, so dass wenigstens ein Bereich der ersten Kammer (7) von dem Einspritzraum (4) hydraulisch getrennt ist.

5. Dosierventil nach Anspruch 4, **dadurch gekennzeichnet, dass** die Düsennadel (5) und die Düsenspitze (2) in Form eines nach außen öffnenden Ventils ausgebildet sind, und
dass ein Federelement (8) vorgesehen ist, das die Düsennadel (5) nach innen in Richtung auf eine Sitzfläche (33) vorspannt.

6. Dosierventil nach Anspruch 4, **dadurch gekennzeichnet, dass** die Düsennadel (39) und die Düsenspitze (2) in Form eines nach innen öffnenden Ventils ausgebildet sind,
dass die Düsennadel (39) einen Anschlag (25) aufweist, an dem ein Federelement (8) gegen das Gehäuse (1) eingespannt ist, so dass die Düsennadel (39) nach außen in Richtung auf einen Ventilsitz (41) vorgespannt ist.

7. Dosierventil nach einem der Ansprüche 5 oder 6, **dadurch gekennzeichnet, dass** das Federelement in der ersten Kammer (7) angeordnet ist.

8. Dosierventil nach einem der Ansprüche 4 bis 7, **dadurch gekennzeichnet, dass** der Aktor (16) als piezoelektrischer Aktor ausgebildet ist, dass der piezoelektrische Aktor eine Rohrfeder (17) aufweist, dass die Rohrfeder (17) Schlitze aufweist, und dass Fluid durch die Schlitze zum piezoelektrischen Aktor gelangt.

9. Dosierungsventil nach einem der Ansprüche 4 bis 8, **dadurch gekennzeichnet, dass** der Faltenbalg (6) in der Weise ausgebildet ist, dass die Düsennadel (5, 39) druckausgeglichen ist.

## Claims

1. Metering valve having a housing in which:
- an activatable actuator is provided for metering in a fluid,
- the actuator is functionally connected to an adjusting element,
- a hydraulic transmission element having a hydraulic chamber (11) is provided between the actuator (16) and the adjusting element (5, 39),
- the hydraulic chamber (11) is filled with a separate fluid,
- a deflection of the actuator (16) can be transmitted to the adjusting element (5, 39) via the transmission element,
**characterized**
**in that**
- the hydraulic chamber (11) is connected to a fluid reservoir, which is at a predeterminable pressure, via at least one sealing gap (23, 24),
- **in that** the fluid reservoir is connected to a pressure-generating means and the pressure in the fluid reservoir is predetermined by the pressure-generating means and is kept constant irrespective of temperature or wear and tear influences.

2. Metering valve according to Claim 1, **characterized in that** the hydraulic chamber (11) is bounded by a first piston (9) which is guided movably in a first chamber (7) via a sealing gap (24), and **in that**
the first chamber (7) is connected to the fluid reservoir.

3. Metering valve according to either of Claims 1 and 2, **characterized in that** the actuator (16) is functionally connected to a second piston (10) which is adjacent to the hydraulic chamber (11) and, via a further sealing gap (23), is guided movably in an actuator chamber (20) which is connected to the fluid reservoir.

4. Metering valve according to either of Claims 2 and 3, **characterized in that** a nozzle needle (5, 39) is fastened to the first piston (9), **in that** the nozzle needle (5, 39) is guided through the first chamber (7) and through an injection space (4) to a nozzle tip (2), and **in that** a bellows (6) is connected in a peripherally sealed manner to the nozzle needle (5, 39) and to the housing (1), with the result that at least one region of the first chamber (7) is hydraulically separated from the injection space (4).

5. Metering valve according to Claim 4, **characterized in that** the nozzle needle (5) and the nozzle tip (2) are designed in the form of an outwardly opening valve, and **in that** a spring element (8) is provided which prestresses the nozzle needle (5) inward in the direction of a seat surface (33).

6. Metering valve according to Claim 4, **characterized in that** the nozzle needle (39) and the nozzle tip (2) are designed in the form of an inwardly opening valve, and **in that** the nozzle needle (39) has a stop (25) at which a spring element (8) is clamped against the housing (1), with the result that the nozzle needle (39) is prestressed outward in the direction of a valve seat (41).

7. Metering valve according to either of Claims 5 and 6, **characterized in that** the spring element is arranged in the first chamber (7).

8. Metering valve according to one of Claims 4 to 7, **characterized in that** the actuator (16) is designed as a piezoelectric actuator, **in that** the piezoelectric actuator has a tube spring (17), **in that** the tube spring (17) has slots, and **in that** fluid passes through the slots to the piezoelectric actuator.

9. Metering valve according to one of Claims 4 to 8, **characterized in that** the bellows (6) is designed in such a manner that the nozzle needle (5, 39) is pressure-compensated.

## Revendications

1. Soupape de dosage comprenant un boîtier, dans lequel
- un actionneur commandable pour le dosage d'un fluide est prévu,
- l'actionneur est en liaison d'action avec un élément de commande,
- un organe de transmission hydraulique contenant une chambre hydraulique (11) est disposé entre l'actionneur (16) et l'organe de commande (5, 39),
- la chambre hydraulique (11) est remplie d'un fluide séparé,
- une élongation de l'actionneur (16) peut être transmise via l'organe de transmission à l'élément de commande (5, 39),
**caractérisée en ce que**
- la chambre hydraulique (11) est en communication par au moins un interstice de joint (23, 24) avec un réservoir de fluide qui est sous une pression ajustable,
- le réservoir de fluide est raccordé à un moyen de génération de pression, et la pression dans le réservoir de fluide est préétablie par le moyen de génération de pression et maintenue constante indépendamment d'influences thermiques ou d'usure.

2. Soupape de dosage selon la revendication 1, **caractérisée en ce que** la chambre hydraulique (11) est délimitée par un premier piston (9) qui est guidé de façon mobile dans une première chambre (7) par l'intermédiaire d'un interstice de joint (24), et que
la première chambre (7) est en communication avec le réservoir de fluide.

3. Soupape de dosage selon l'une des revendications 1 ou 2, **caractérisée en ce que** l'actionneur (16) est en communication d'action avec un deuxième piston (10) attenant à la chambre hydraulique (11), et qu'il est guidé par un autre interstice de joint (23) de façon mobile dans une chambre d'actionneur (20) qui est en communication avec le réservoir de fluide.

4. Soupape de dosage selon l'une des revendications 2 ou 3, **caractérisée en ce qu'**une aiguille d'injecteur (5, 39) est fixée au premier piston (9),
que l'aiguille d'injecteur (5, 39) est guidée à travers la première chambre (7) et un volume d'injection (4) vers une pointe d'injecteur (2),
qu'un soufflet (6) est relié de manière étanche à la périphérie à l'aiguille d'injecteur (5, 39) et au boîtier (1), de sorte qu'au moins une partie de la première chambre (7) est séparée hydrauliquement du volume d'injection (4).

5. Soupape de dosage selon la revendication 4, **caractérisée en ce que** l'aiguille d'injecteur (5) et la pointe d'injecteur (2) sont réalisées sous forme d'une soupape s'ouvrant vers l'extérieur, et
qu'un élément de ressort (8) est prévu qui charge l'aiguille d'injecteur (5) vers l'intérieur en direction d'une surface de siège (33).

6. Soupape de dosage selon la revendication 4, **caractérisée en ce que** l'aiguille d'injecteur (39) et la pointe d'injecteur (2) sont réalisées sous forme d'une soupape s'ouvrant à l'intérieur,
que l'aiguille d'injecteur (39) comprend une butée (25) contre laquelle un élément de ressort (8) est contraint contre le boîtier (1), de sorte que l'aiguille d'injecteur (39) est précontrainte vers l'extérieur en direction d'un siège de soupape (41).

7. Soupape de dosage selon l'une des revendications 5 ou 6, **caractérisée en ce que** l'élément de ressort est disposé dans la première chambre (7).

8. Soupape de dosage selon l'une des revendications 4 à 7, **caractérisée en ce que** l'actionneur (16) est réalisé sous forme d'actionneur piézo-électrique, que l'actionneur piézo-électrique comprend un tube-ressort (17), que le tube-ressort (17) présente des fentes, et que du fluide peut arriver à travers les fentes à l'actionneur piézo-électrique.

9. Soupape de dosage selon l'une des revendications 4 à 8, **caractérisée en ce que** le soufflet (6) est réalisé de telle manière que l'aiguille d'injecteur (5, 39) est équilibrée en pression.
